# EUROPÄISCHE PATENTANMELDUNG

(11) **EP 1 997 680 A2**
(43) Veröffentlichungstag der Anmeldung: **03.12.2008**
(21) Anmeldenummer: 08014567.5
(22) Anmeldetag: 25.08.2006
(51) Int. Cl.: B60P 3/40, B60P 1/64, B62D 21/14

(54) **Verriegelungsvorrichtung für einen ausziehbaren Lastenträger von Fahrzeugen, insbesondere Pkw**

(30) Priorität: 31.08.2005 DE 102005041540
(62) Teilanmeldung aus: 06017712.8
(71) Anmelder: Magna Car Top Systems GmbH, 74321 Bietigheim-Bissingen (DE)
(72) Erfinder: Hahn, Gerald, Dipl.-Ing., 21255 Wistedt (DE); Schumacher, Thorsten, Dipl.-Ing. (FH), 25495 Kummerfeld (DE); Maucher, Eberhard, 89075 Ulm (DE); Hans, Sandro, 65183 Wiesbaden (DE)

(57) **Zusammenfassung**

Ein insbesondere als Fahrradträger ausgestalteter heckseitiger Lastenträger für Fahrzeuge, vor allem Pkw, ist teleskopisch ausziehbar und weist ein Führungsprofil sowie ein Tragprofil auf, wobei das Führungsprofil als inneres Profil zum Aufbau des Fahrzeuges festliegt und das Tragprofil als übergreifendes, insbesondere U-förmigen Querschnitt aufweisendes Profil längsverschieblich auf dem Führungsprofil aufliegt und über eine Spannvorrichtung zum Führungsprofil festzulegen ist, die den längsgeschlitzten Obergurt des Führungsprofiles und den Steg des Tragprofiles durchsetzt.

## Beschreibung

Die Erfindung betrifft eine Verriegelungsvorrichtung für einen ausziehbaren Lastenträger von Fahrzeugen, insbesondere Pkw, gemäß dem Oberbegriff des Anspruches 1.

Lastenträger der vorgenannten Art sind aus der US 3,488,077 bekannt. Sie sind als rückseitig zu Pickup-Fahrzeugen in Stoßfängerhöhe teleskopisch ausziehbare Tragvorrichtungen für Wohncontainer ausgebildet, die sich mit einem rückwärtigen, über die Ladefläche des Pickup-Fahrzeuges nach hinten überstehenden Überhang auf der ausgezogenen Tragvorrichtung abstützen.

Zur Festlegung gegenüber dem Fahrzeugaufbau sind dem Lastenträger Führungsbahnen zugeordnet, die am Fahrzeugaufbau befestigbare Führungsprofile aufweisen, in denen längsverschieblich Tragprofile gehalten sind, wobei die Tragprofile an ihren rückwärtigen freien Enden den Stoßfänger des Fahrzeuges tragen und über Arretierungseinrichtungen zu den Führungsprofilen, und damit auch zum Fahrzeugaufbau festzulegen sind.

Ausgehend von den äußeren Führungsprofilen sind die ausziehbaren Tragprofile über Steckbolzenanordnungen zu arretieren, die auf in den Tragprofilen angeordnete Lochraster zugreifen, wobei die Tragprofile infolge ihrer Führung in den umschließenden Führungsprofilen über ihre ausziehbaren Längsabschnitte lediglich im ausgezogenen Zustand belegt werden können, zur bleibenden Montage von Anbauteilen aber nicht zur Verfügung stehen.

Hiervon abgesehen müssen Führungsprofile und Tragprofile auch mit relativ engem Spiel zueinander ausgeführt sein, da anderenfalls die Arretierbolzen zugleich Tragfunktionen übernehmen müssen, was zu hohen lokalen Belastungen seitens der Führungsbahnen führen würde. Entsprechend enge Spiele sind aber kritisch unter Korrosionsgesichtspunkten.

Der Erfindung liegt die Aufgabe zugrunde, für ausziehbare Lastenträger der vorgenannten Art eine Verriegelungsvorrichtung zu schaffen, über die der Lastenträger bei konstruktiv einfachem mechanischen Aufbau funktionssicher in seiner jeweiligen, ausgezogenen oder eingefahrenen Endlage selbsttätig zu verriegeln ist.

Gemäß der Erfindung wird dies mit den Merkmalen des Anspruches 1 erreicht. Die Unteransprüche geben zweckmäßige Weiterbildungen an.

Erfindungsgemäß erfolgt die Verriegelung des ausziehbaren Teiles des Lastenträgers in seiner eingeschobenen und ausgezogenen Lage über eine auf ihre Verriegelungslage federbelastete Drehfalle. Damit wird für die Verriegelung auf ein erprobtes und auch unter ungünstigen Einsatzbedingungen funktionssicheres, einfaches Bauteil zurückgegriffen.

Dieses ist zweckmäßigerweise dem aufbaufesten Teil des Lastenträgers zugeordnet, bedingt somit keine Gewichtsbelastung des ausziehbaren Teiles des Lastenträgers und ermöglicht auch eine einfache Fernbedienung zur Entriegelung.

In erfindungsgemäßer Ausgestaltung der Verriegelung ist die Drehfalle zweckmäßigerweise als zweiarmiger Hebel gestaltet, bei Vorspannung der Drehfalle auf ihre Verriegelungsstellungen, womit sowohl beim Ausziehen wie auch beim Einschieben des ausziebaren Teiles des Lastenträgers selbsttätig die Verriegelung realisiert werden kann.

Anzuordnen ist die Drehfalle bevorzugt im längsmittleren Bereich zwischen den Führungsbahnen am bezogen auf einen heckseitig ausziehbaren Lastenträger rückwärtigen Endbereich des zum Fahrzeug feststehenden Teiles des Lastenträgers.

Weitere Einzelheiten und Merkmale der Erfindung ergeben sich aus den Ansprüchen. Ferner wird die Erfindung nachfolgend anhand von Ausführungsbeispielen erläutert. Es zeigen:
- Fig. 1: einen erfindungsgemäßen ausziehbaren Lastenträger, in einer auf die Grundstruktur des Trägers reduzierten perspektivischen Explosivdarstellung, mit dessen zum Fahrzeug lagefesten Trägerteil und dem gegenüber dem lagefesten Trägerteil teleskopisch ausziehbaren Trägerteil,
- Fig. 2: eine Draufsicht auf einen erfindungsgemäßen ausziehbaren Lastenträger mit seinen wesentlichsten Komponenten im zusammengeschobenen Zustand,
- Fig. 3: eine der Fig. 2 entsprechende Darstellung bei ausgezogenem Lastenträger,
- Fig. 4: eine Ansicht des Lastenträgers, wie er in Fig. 3 dargestellt ist, in Richtung des Pfeiles IV,
- Fig. 5: eine schematisierte und vereinfachte Schnittdarstellung eines Lastenträgers gemäß Fig. 3 bei einer Schnittführung V-V, wobei von denen in der Schnittebene liegenden Spannvorrichtungen die eine in einer vereinfachten Explosionsdarstellung gezeigt ist,
- Fig. 6 bis 10: schematisierte Darstellungen, teilweise im Schnitt, des in Verbindung mit der Spannvorrichtung vorgesehenen Spannschlosses, und
- Fig. 11: in schematisierter Darstellung eine Drehfallenanordnung, über die der ausziehbare Teil des Lastenträgers in seiner ausgefahrenen und in seiner eingeschobenen Lage verriegelbar ist.

In den Figuren ist mit F die Vorwärtsfahrtrichtung eines nicht dargestellten Fahrzeuges, beispielsweise und insbesondere eines Personenkraftwagens, angegeben, zu dem ein heckseitig ausziehbarer Lastenträger 1 vorgesehen ist, der zueinander beabstandet und parallel verlaufende Führungsbahnen 2, 3 aufweist, die für den Lastenträger 1 eine Tragebene 4 bestimmen und die durch Führungsprofile 5 und Tragprofile 6 gebildet sind.

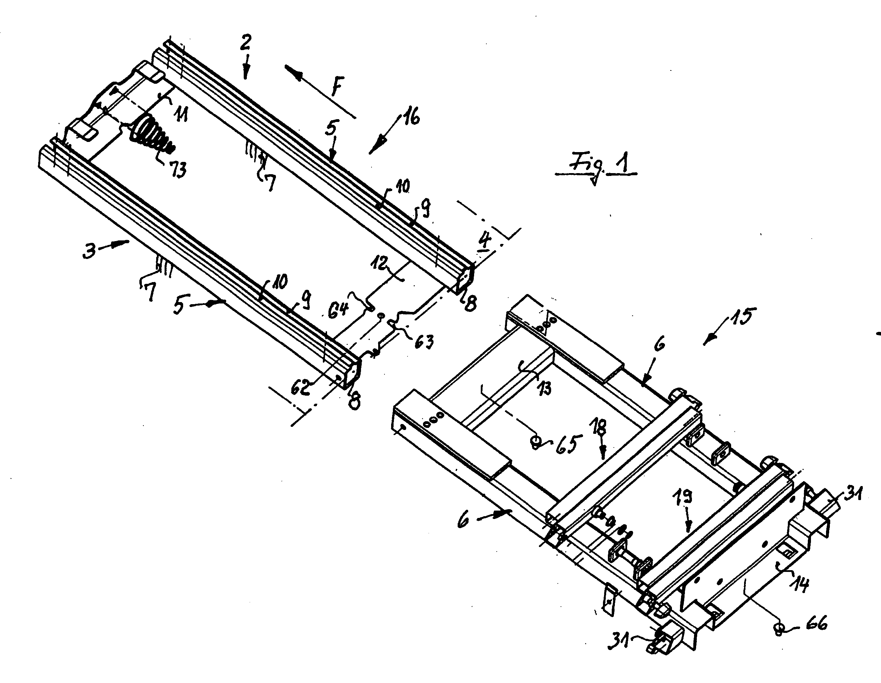

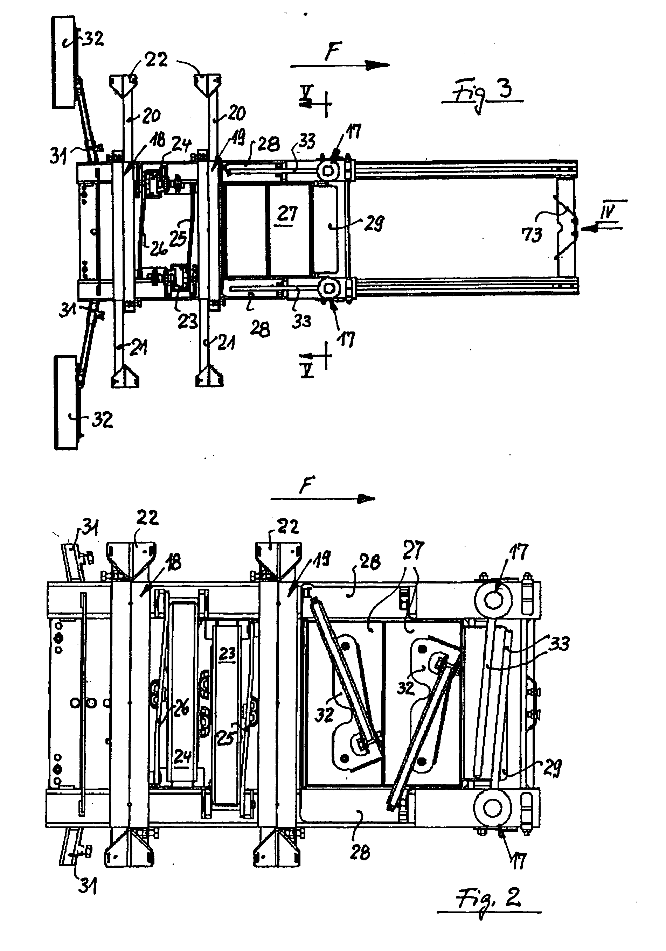

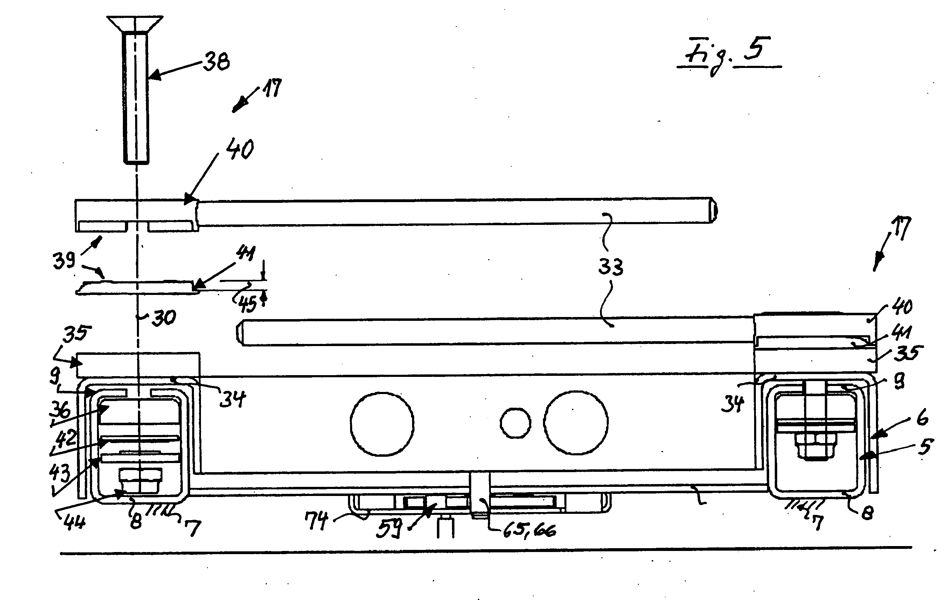

Die Führungsprofile 5 sind als innere Profile der Führungsbahnen 2, 3 zum Aufbau des Fahrzeuges festgelegt, wobei der Fahrzeugaufbau 7 durch eine Schraffierung (siehe Fig. 1 und 3) angedeutet ist und die Festlegung zum Aufbau 7 im Bereich der Führungsprofile 5 durch entsprechende Laschenanordnungen oder dergleichen erfolgen kann, gegebenenfalls auch durch in die Führungsprofile 5 eingeschobene, fahrzeugseitige Stützprofile. Die Anbindung der Führungsprofile 5 zum Aufbau über Laschen oder dergleichen kann im Bereich ihrer Untergurte 8 erfolgen, denen die Obergurte 9 gegenüberliegen, die mit einem längsdurchlaufenden Schlitz - Längsschlitz 10 - versehen sind. Zwischen den Führungsprofilen 5 sind endseitig Querverbindungen 11, 12 vorgesehen und längs der Führungsprofile 5 sind die Tragprofile 6 verschieblich, die als die Führungsprofile 5 übergreifende, insbesondere U-förmige Profile ausgebildet sind. Die Tragprofile 6 sind ebenfalls über Querstreben 13, 14 verbunden, so dass sich ein schlittenförmiges Grundgerüst für den ausziehbaren Teil 15 des Lastenträgers ergibt, der gegenüber dem aufbauseitig festgelegten, lage- und aufbaufesten Teil 16 des Lastenträgers teleskopisch ausziehbar ist. Die eingeschobene und die ausgezogene Lage des ausziehbaren Teiles 15 des Lastenträgers 1 wird als Endlage, was in Fig. 1 nicht ersichtlich ist, gesichert und der ausziehbare Teil 15 ist gegenüber dem lagefesten Teil 16 in der ausgezogenen Lage ferner über eine Spannvorrichtung 17 festzulegen, wie sie in Fig. 5 des Näheren erläutert ist. Ferner trägt der ausziehbare Teil 15 des Lastenträgers 1 die im Hinblick auf dessen Einsatz als Fahrradträger vorgesehenen Montage- bzw. Zubehörteile, wie anhand der Fig. 2 und 3 noch ergänzend beschrieben wird.

Wie Fig. 2 und 3 zeigen, umfasst die Ausrüstung des ausziehbaren Teiles 15 des Lastenträgers 1 als Fahrradträger zwei mit Abstand zueinander angeordnete Querführungen 18, 19, die zu den Tragprofilen 6 lagefest sind und die jeweils Führungskanäle für in Querrichtung nach entgegengesetzten Seiten ausziehbare Ausleger 20, 21 bilden, die im Bereich ihrer freien Enden Auflagen 22 für die Räder eines quer zur Fahrtrichtung F aufzustellenden Fahrrades aufzeigen. Für jedes der nicht gezeigten und mit seinen Laufrädern auf den Aufnahmen 22 abgestellten Fahrräder ist ferner seitlich zu den Querführungen 18, 19, im Zwischenraum zwischen diesen liegend, eine Rahmenstütze 23, 24 vorgesehen. Jeweils eine der Rahmenstützen 23, 24 ist an einem der Tragprofile 6 in Querrichtung verschwenkbar angelenkt und zwischen einer aufrechten Stützlage (Fig. 3) und einer Ablagestellung verschwenkbar, in der sie gegeneinander eingeschwenkt zwischen den Querführungen 18, 19 liegen. Den Rahmenstützen 23, 24 sind jeweils entsprechend verschwenkbare und aufstellbare Stützstreben 25, 26 zugeordnet. Im Rahmen der Erfindung können die Stützstreben auch durch Kniehebel gebildet sein, die in ihrer Strecklage eine Tot- oder Übertotpunktlage einnehmen und abgelegt zusammengefaltet sind.

Gegen das bezogen auf die Fahrtrichtung F vordere Ende des ausziehbaren Teiles 15 des Fahrradträgers ist der an die Querführung 19 anschließende Teil des Raumes zwischen den Tragprofilen 6 durch einen schubladenartigen Einsatzkasten 27 ausgefüllt, der über ausgestellte Randstreifen 28 auf den Tragprofilen 6 und einen Randstreifen 29 auf der Querstrebe 13 abgestützt ist und einen lagefesten Bestandteil des ausziehbaren Teiles 15 bildet, wobei der Einsatzkasten 27 zur umschließenden Umrahmung bevorzugt verklebt ist.

In bezogen auf die Fahrtrichtung vorderen Endbereich des ausziehbaren Teiles 15 sind die in der Verbindung der Tragprofile 6 zu den Führungsprofilen 5 vorgesehenen Spannvorrichtungen 17 angeordnet.

Am gegenüberliegenden Ende der Tragprofile 6 sind diese mit seitlichen Steckaufnahmen 31 für rückseitig zum Fahrzeug anzuordnende Beleuchtungsanordnungen 32 versehen, die, wie Fig. 2 veranschaulicht, zur Überführung des Lastenträgers 1 in seine eingeschobene Nichtgebrauchslage abgenommen und in dem Einsatzkasten 27 abgelegt werden.

In der eingeschobenen Lage des Lastenträgers 1, wie Fig. 2 veranschaulicht, bildet der Lastenträger 1 somit eine sehr kompakte Einheit, wobei die den Spannvorrichtungen 17 zugeordneten Stellhebel 33 ebenfalls eine Querlage einnehmen. Aus dieser der Öffnungslage der Spannvorrichtung 17 entsprechenden Querlage sind die Stellhebel 33 zum Spannen der Spannvorrichtung 17 in die in Fig. 3 veranschaulichten, zu den jeweiligen Führungsbahnen 2, 3 parallelen Lagen verschwenkbar, in der sich die Stellhebel gegen die Querführungen 19 und damit entgegen der Fahrtrichtung F erstrecken und gegebenenfalls auch über eine entsprechende Sicherungsanordnung arretiert sind.

Die das bis auf den Längsschlitz 10 geschlossene Führungsprofil 5 und die das das Führungsprofil 5 übergreifende, U-förmige Tragprofil 6 verbindende Spannvorrichtung 17 zeigt bevorzugt einen Aufbau gemäß Fig. 5, bei dem das Führungsprofil 5 und das Tragprofil 6 in Richtung der Spannachse 30 gegeneinander zu verspannen sind, wobei das Führungsprofil 5 mit dem Obergurt 9 gegen den Steg 34 des im Querschnitt U-förmigen Tragprofiles 6 anliegt. Der Steg 34 - als Obergurt des Tragprofiles 6 - ist im Bereich der Spannvorrichtung 17 von einer Abdeckplatte 35 überdeckt, die sich im Wesentlichen über den in Fahrtrichtung F auslaufenden Endbereich des Tragprofiles 6 erstreckt und die als bevorzugt verstärkende und aussteifende Auflage zum Steg 34 mit diesem fest, beispielsweise durch Schweißung verbunden ist. Zur Abdeckplatte 35 korrespondiert eine innerhalb des Führungsprofiles 5 liegende, längs desselben verschiebbare Gegenplatte 36, die bevorzugt in der Funktion eines Kulissensteins zwischen den Seitenwänden 37 des Führungsprofiles 5 längsverschieblich geführt ist und die in Richtung auf die Abdeckplatte 35 in Überdeckung zu den auf den Längsschlitz 10 zulaufenden Schenkeln des Obergurtes 9 liegt.

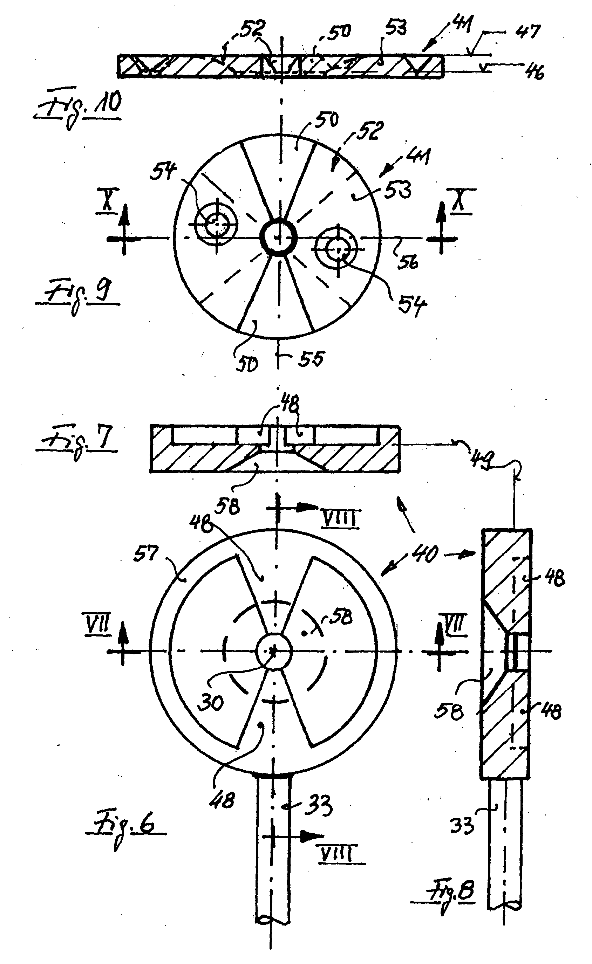

Die Abdeckplatte 35 ist gegen die Gegenplatte 36 über einen die Spannvorrichtung 17 längs der Spannachse 30 durchsetzenden Spannzapfen 38 zu verspannen, und zwar mithilfe eines Spannschlosses 39, das eine Spannscheibe 40 und ein zu dieser korrespondierendes, scheibenförmiges Gegenstück 41 aufweist, gegenüber dem die Spannscheibe 40 bei Verdrehung um die Spannachse 30 in Richtung der Spannachse 30 zu verlagern ist. Das scheibenförmige Gegenstück 41 ist zur Abdeckplatte 35 lagefest, und der Spannzapfen 38 stützt sich einerseits auf der Spannscheibe 40 ab und ist gegen die Gegenplatte 26 über eine Schraubverbindung federnd verspannt, wobei hierzu eine Tellerfeder 42 vorgesehen ist, die in Gegenrichtung zur Gegenplatte 36 auf einer Zentrierscheibe 43 abgestützt ist, die sich ihrerseits gegen eine zum Spannzapfen 38 festgelegte Spannmutter 44 abstützt. Über den Federweg der Tellerfeder 42 und das zum Verfahren des ausziehbaren Teiles 15 erforderliche Spiel zwischen Gegenplatte 36 und Führungsprofil 5 wird der Spannweg vorgegeben, der für die Verspannung beim Schließen des Spannschlosses 39 durch Verdrehung der Spannscheibe 40 gegenüber dem Gegenstück 41 zur Verfügung steht. Dieser Spannweg, in Fig. 5 mit 45 angegeben, entspricht im Ausführungsbeispiel dem Abstand zwischen einer Grundebene 46 des scheibenförmigen Gegenstückes 41 und einer gegenüber dieser in Richtung der Spannachse 30 versetzten Spannebene 47 (Fig. 10).

In der gezeigten Ausführungsform weist die Spannscheibe 40 zwei diametral zur Spannachse 30 aneinander gegenüberliegende, sektorförmige Abdrängelemente 48 auf, die gegenüber der Scheibenebene 49 aufragen und sich bei Überdeckungslage der Spannscheibe 40 zum Gegenstück 41 in Richtung auf das Gegenstück erstrecken, das den sektorförmigen Abdrängelementen 48, bezogen auf das nicht gespannte Spannschloss 39, korrespondierende sektorförmige Vertiefungen 50 aufweist, die sich bis auf die Grundebene 46 erstrecken und die in Umfangsrichtung über gegen die Spannebene 47 ansteigende Abdrängflächen 52 begrenzt sind. Die Abdrängflächen 52, als Begrenzungen der seitens des Gegenstückes 41 vorgesehenen Abdrängelemente 53, gehen in die Spannebene 47 verlaufend über, so dass sich in Drehstellungen der Spannscheibe 40 zum Gegenstück 41, denen die seitens der Spannscheibe 40 vorgesehenen Abdrängelemente 48 mit ihren Stirnseiten auf die Abdrängelemente 53 in der Spannebene 57 aufgelaufen sind, eine einer Totlage vergleichbare Spannstellung des Spannschlosses mit reibschlüssiger Sicherung der Drehstellung von Spannscheibe 40 und Gegenstück 41 ergibt. Der hierfür vorgesehene Drehwinkel liegt in der Größenordnung von 90°, wie die Darstellungen gemäß Fig. 2 und 3 durch die Lage der Stellhebel 33 veranschaulichen.

Um im Hinblick auf die aus Fig. 2 ersichtliche, bei symmetrischer Anordnung der Spannvorrichtungen 17 zur Querebene in Bezug auf die Querebene leicht gegensinnige Anstellung der Spannhebel 33 mit symmetrisch ausgebildeten Gegenstücken 41 arbeiten zu können, sind diese in Bezug auf die Längserstreckung der sie tragenden Tragprofile 6 leicht verdreht angeordnet, wobei der diesbezügliche Winkelversatz aus Fig. 9 aus der Lage der Schraublöcher 54 ersichtlich ist, die zur Verschraubung des Gegenstückes 41 gegen die Abdeckplatte 35 vorgesehen sind und die zu einer Querebene 56 zur Symmetrieachse 55 in Gegenrichtung versetzt sind.

Im Ausführungsbeispiel ist die Spannscheibe 40 mit einem umschließenden Rand 57 versehen, dessen Innendurchmesser im Wesentlichen dem Durchmesser der das Gegenstück 41 bildenden Platte entspricht, so dass sich das Spannschloss 39 als nach außen über die Spannscheibe 40 im Wesentlichen randumschlossene Einheit darstellt. Vom Rand 57 geht auch der Stellhebel 33 aus und der Spannzapfen 38 kann mit seinem Kopfteil in eine Senkung 58 eingreifend angeordnet sein, so dass sich für das Spannschloss 39 einschließlich des Stellhebels 53 ein sehr flacher Aufbau ergibt, der im Rahmen der Aufbauhöhe des gesamten Lastenträgers 1 liegt.

Weiter liegt es auch im Rahmen der Erfindung, die Spannvorrichtung, bei grundsätzlich gleichem Aufbau insbesondere auch des Spannschlosses, über einen Stellantrieb zu beaufschlagen und dadurch auch eine Fernbetätigung zu ermöglichen, die gegebenenfalls auch mit einer entsprechenden Antriebsanordnung für die axiale Verstellung des Lastenträgers 1 kombiniert sein kann, so dass für den Lastenträger 1 weitere Bedienungsvereinfachungen im Rahmen der Erfindung liegen.

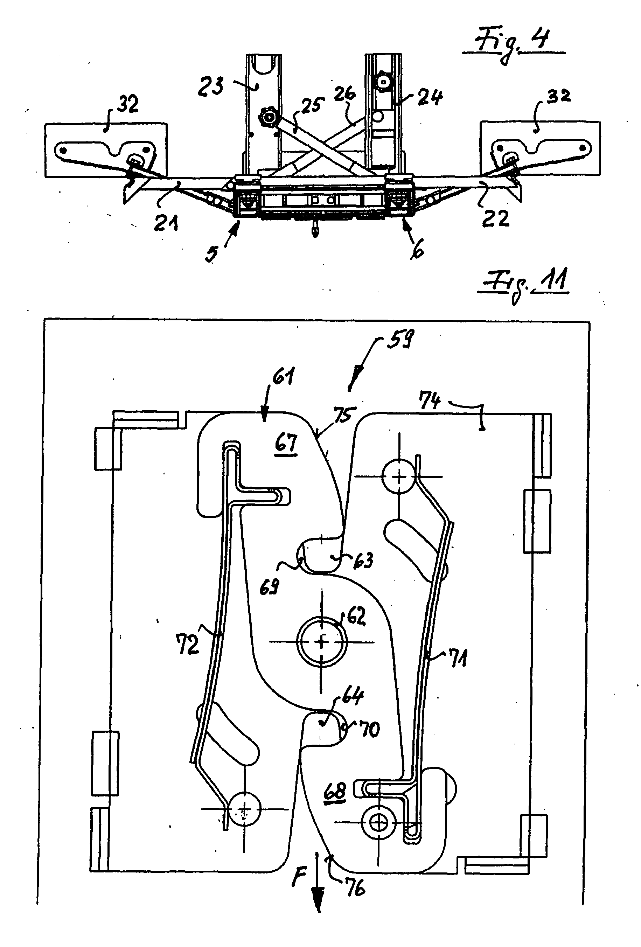

Unabhängig hiervon erweist es sich als zweckmäßig, für den Lastenträger 1 die möglichen Endlagen - ausgezogen oder eingefahren - über eine mechanische Verriegelung zu sichern, die im Rahmen der Erfindung bevorzugt derart gestaltet ist, dass sie sich in Verbindung mit dem Anfahren der jeweiligen Endlage von selbst ergibt. Erfindungsgemäß ist hierzu den Führungsprofilen 5 im Bereich ihres rückwärtigen, zur Fahrtrichtung F entgegengesetzten Teil eine Drehfallenanordnung 59 zugeordnet, wie sie in Fig. 11 veranschaulicht ist, wobei die Drehfallenanordnung 59 bezogen auf Fig. 1 an der Querverbindung 12 abgestützt ist, die für die Drehfalle 61 eine zentrale Lagerbohrung 62 aufweist. Die Querverbindung 12 ist auch mit in Ein- bzw. Ausfahrrichtung des ausziehbaren Teiles 15 des Lastenträgers sich öffnenden Führungsöffnungen 63, 64 versehen ist, denen seitens des ausfahrbaren Teiles 15 des Lastenträgers zur Drehfalle 61 korrespondierende Rastglieder 65, 66 zugeordnet sind. Die Rastglieder 65, 66 sind im Ausführungsbeispiel durch unterseitig zu den Querstreben 13, 14 vorgesehene Rastbolzen gebildet, die in Hochrichtung in Überschneidungsweg zu den Führungsöffnungen 63, 64 liegen.

Die Drehfallenanordnung 59, die als Ausschnitt in Fig. 11 schematisch dargestellt ist, weist eine als Doppelhebel ausgestaltete Drehfalle 61 auf, die, bezogen auf die Fahrtrichtung F, beiderseits der Lagerbohrung 62 sich erstreckende Hebelarme 67, 68 aufweist. Die Hebelarme 67, 68 sind mit sich quer zur Fahrtrichtung F nach entgegengesetzten Seiten öffnenden Fangmäulern 69, 70 versehen, welche bezogen auf die Verriegelungslage der Drehfalle 61 in Überdeckung zu den sich in Fahrtrichtung F erstreckenden Führungsöffnungen 63, 64 liegen, wobei diese Führungsöffnungen in der Darstellung gemäß Fig. 11 in einer Abdeckung 74 für die Drehfallenanordnung 59 veranschaulicht sind, die zur Querverbindung 12 festgelegt sein kann, bei entsprechender Überdeckungen der für diese in Fig. 1 gezeigten Führungsöffnungen 63, 64.

In der Verriegelungslage der Drehfalle 61 liegen, wie in Fig. 11 gezeigt, die Fangmäuler 69, 70 derartig in Überdeckung zu den Führungsöffnungen 63, 64, dass über die Drehfalle 61 das von dieser jeweils erfasste Rastglied 65, 66 in der Führungsöffnung 63, 64 fixiert ist. Die Drehfalle 61 ist bezogen auf diese Verriegelungslage federnd vorgespannt, was im Ausführungsbeispiel gemäß Fig. 11 über Blattfederanordnungen 71, 72 veranschaulicht ist und in Gegenrichtung, durch Beaufschlagung ihrer Abdrängflächen 75, 76 über die Rastglieder 65, 66 abdrängbar. Ferner ist die Drehfalle 61 entgegen der federbelasteten Verriegelungslage über eine nicht dargestellte Fernbetätigung, beispielsweise eine Bowdenzugverbindung in eine Entriegelungslage verschwenkbar, so dass neben einer selbsttätig erfolgenden Verriegelung in der jeweiligen Endlage des ausfahrbaren Teiles 15 des Lastenträgers 1 die Entriegelung auch bei ungünstigen Zugriffsgegebenheiten in einfacher Weise vorgenommen werden kann, andererseits aber eine Entriegelung von außen, beispielsweise durch Nichtbefugte nur unter Schwierigkeiten möglich ist.

Insbesondere in Verbindung mit den angesprochenen Entriegelungsmöglichkeiten für den Lastenträger 1 bei eingefahrenem, ausziehbarem Lastenträgerteil 15 erweist es sich als zweckmäßig, wenn der ausziehbare Lastenträgerteil 15 in Auszugsrichtung auch über einen Auswerfer 73 federbelastet ist, so dass sich beim Lösen der über die Drehfallenanordnung 59 gesicherten eingefahrenen Endstellung eine gewisse Verschiebung des ausziehbaren Lastenträgerteiles 15 in Öffnungsrichtung ergibt, die einen guten Zugriff auf den ausziehbaren Lastenträgerteil 15 ermöglicht, auch wenn dieser in seiner eingeschobenen Lage gegebenenfalls über eine Abdeckung, insbesondere eine Sichtblende zugriffsgeschützt ist. Der Auswerfer 73 ist symbolisch als Wendelfeder in Fig. 1 veranschaulicht, kann in für Schubladen oder dergleichen üblicher Weise aber auch als gebogene Blattfeder (Fig. 3 und 4) oder dergleichen ausgestaltet sein.

## Patentansprüche

1. Verriegelungsvorrichtung für einen ausziehbaren Lastenträger von Fahrzeugen, insbesondere Pkw, der ein aufbauseitig festgelegtes Teil (16) und ein gegenüber diesem teleskopisch ausziehbares und verriegelbares Teil (15) aufweist,
**dadurch gekennzeichnet,**
**dass** das ausziehbare Teil (15) des Lastenträgers (1) in seiner eingeschobenen und in seiner ausgezogenen Endlage über eine Drehfalle (61) verriegelbar ist, die auf ihre Verriegelungslage federbelastet ist.

2. Verriegelungsvorrichtung nach Anspruch 1,
**dadurch gekennzeichnet,**
**dass** die Drehfalle (61) dem aufbaufesten Teil (16) des Lastenträgers (1) zugeordnet ist.

3. Verriegelungsvorrichtung nach Anspruch 1 oder 2,
**dadurch gekennzeichnet,**
**dass** die Drehfalle (61) am bezogen auf die Ausziehrichtung des Lastenträgers (1) vorderen Endbereich des aufbaufesten Teiles (16) des Lastenträgers vorgesehen ist und, ausgebildet als zweiarmiger Hebel, im Verfahrweg des ausziehbaren Teiles (15) des Lastenträgers (1) liegt, dem im Bereich seiner gegenüberliegenden Enden jeweils ein zur Drehfalle (61) korrespondierendes Rastglied (65, 66) zugeordnet ist.

4. Verriegelungsvorrichtung nach Anspruch 3,
**dadurch gekennzeichnet,**
**dass** das Rastglied (65, 66) als Rastbolzen ausgebildet ist.

5. Verriegelungsvorrichtung nach Anspruch 3 oder 4,
**dadurch gekennzeichnet,**
**dass** der zweiarmige, die Drehfalle (61) bildende Hebel sich in Ausziehrichtung des Lastenträgers (1) erstreckt und in seinen in Bezug auf seine Drehachse einander gegenüberliegenden Hebelarmen (67, 68) mit nach gegengesetzten Seiten sich öffnenden Fangmäulern (69, 70) versehen ist.

6. Verriegelungsvorrichtung nach Anspruch 5,
**dadurch gekennzeichnet,**
**dass** die Drehfalle (61) mit auf die Öffnung des jeweiligen Fangmaules (69, 70) zulaufenden Abdrängflächen (75, 76) versehen ist.

7. Verriegelungsvorrichtung nach einem der Ansprüche 4 bis 6, **dadurch gekennzeichnet,**
**dass** die Öffnungen des jeweiligen Fangmaules (69, 70) hakenförmig ausgebildet sind und jeweils in Überdeckung zu einer Führungsöffnung (63, 64) liegen.

8. Verriegelungsvorrichtung nach einem der Ansprüche 1 bis 7,
**dadurch gekennzeichnet,**
**dass** die teleskopisch gegeneinander zwischen Endlagen verstellbaren Teile (15, 16) des Lastenträgers (1) über zu einer Tragebene (4) parallele und beabstandet zueinander verlaufende Führungsbahnen verbunden sind, die jeweils, konturangepasst und zueinander längsverschieblich, ein inneres Profil und ein äußeres Profil aufweisen, von denen das eine ein aufbauseitig festgelegtes Führungsprofil (5) und das andere ein zum Führungsprofil (5) ausziehbares Tragprofil (6) bildet.

9. Verriegelungsvorrichtung nach Anspruch 8,
**dadurch gekennzeichnet,**
**dass** das Führungsprofil (5) das innere Profil bildet.
